Europäisches Patentamt

(19) European Patent Office

Office européen des brevets

(11) Publication number: **0 037 148**
**B1**

## EUROPEAN PATENT SPECIFICATION

(12)

(45) Date of publication of the patent specification:
**20.07.83**

(21) Application number: **81200328.3**

(22) Date of filing: **25.03.81**

(51) Int. Cl.³: **B 01 J 2/04,** C 05 C 9/00

(54) Process for making urea prills.

(30) Priority: **29.03.80 NL 8001876**

(43) Date of publication of application:
**07.10.81 Bulletin 81/40**

(45) Publication of the grant of the patent:
**20.07.83 Bulletin 83/29**

(84) Designated Contracting States:
**AT BE DE FR GB IT NL SE**

(56) References cited:
**GB-A-1 503 504**
**US-A-3 450 804**
**US-A-3 457 336**
**US-A-3 518 329**
**US-A-3 533 776**
**US-A-3 951 638**

(73) Proprietor: **UNIE VAN KUNSTMESTFABRIEKEN B.V.,**
**Postbus 45, NL-3500 AA Utrecht (NL)**

(72) Inventor: **Willems, Michael Hendrik, Nassaustraat 9,**
**NL-6166 BD Geleen (NL)**
Inventor: **Klok, Jan Willem, Groothertog Janstraat 7,**
**NL-6164 BV Geleen (NL)**

(74) Representative: **Roeffen, Wilhelmus Johannes Maria et**
**al, OCTROOIBUREAU DSM Postbus 9, NL-6160 MA**
**Geleen (NL)**

ACTORUM AG

Process for Making Urea Prills

The invention relates to a process for making urea prills by allowing drops of a substantially water-free urea melt to fall, counter current to a cooling gas, through a cooling zone in which seeding material has been dispersed.

It is known to make urea prills by spraying a practically water-free urea melt counter current to a cooling gas in a cooling zone in which solid urea particles or particles of another seeding material, preferably in colloidal condition or as a mist, are present (United States patent specification 3,450,804).

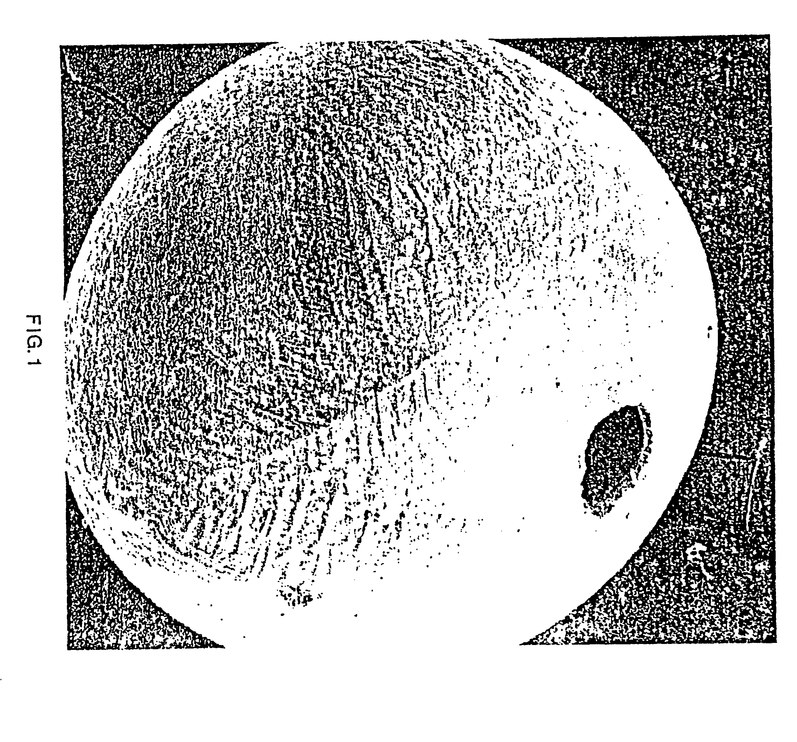

It has been found, however, that in applying this known method the drops will change, during the cooling from the surface inwards, into a limited number of large crystallites oriented in practically the same direction, in which process the outer skin formed first is locally sucked inwards during the cooling and solidification of the rest of the prill, so that cavities will be formed (see figure 1). In consequence hereof the prills have small impact strength, and in the transport and processing of such prills pulverization and dust formation will occur. This disadvantage particularly occurs in bulk transport, which takes place to an increasing extent.

It has now been found that the above-mentioned disadvantages can be avoided and that prills with random orientation of the crystallites and without cavities will be formed if, in the cooling zone, a dispersion of crystalline particles with dimensions of between 2 and 10 $\mu$m and in a quantity of 8–25 mg per m$^3$ of cooling gas is maintained.

Particles with dimensions smaller than 2 $\mu$m have no effect as seeding material, because they are carried, by the cooling gas, round the drops and hence do not hit these. Particles with dimensions larger than 10 $\mu$m can be applied, but have the same effect as particles of 2–10 $\mu$m. Application of such particles makes it necessary, however, to use larger quantities by weight of seeding material. Preferably, particles with dimensions of 4–8 $\mu$m are applied.

Besides being dependent on the particle size, the required quantity of seeding material also depends albeit to a substantially smaller degree, on the size of the drops of the sprayed urea melt. For making urea prills with a diameter of between 1 and 3 mm, it has been found that a good result is obtained if, per m$^3$ of cooling gas, 8–25 mg of the seeding material with particle size of between 2 and 10 $\mu$m are present. In that case the number of particles per m$^3$ of cooling gas varies between $0.01 \times 10^9$ and $4.5 \times 10^9$. The lower, respectively higher, value relates to seeding material of which all particles have a diameter of 10, respectively 2, $\mu$m.

A seeding material preference is given to the use of urea particles. These can be obtained by grinding urea prills or urea crystals. In order to ensure good grinding and flow in the lines, an anticaking agent can be added to the crystalline urea to be ground.

Suitable anticaking agents are Ca, Mg, Zn and Al salts of higher fatty acids, clay, talc calcite and sepiolite. An anticaking agent particularly suitable for this purpose is calcium stearate.

The melt to be sprayed can be obtained by evaporating urea solutions or by melting urea crystals. If a melt is sprayed which has been obtained by melting urea crystals, preference will be given to melting in the neighbourhood of the spraying facility, for instance at the top of the prilling tower, in order to prevent the formation of biuret as far as possible. The crystals are then passed, preferably pneumatically, to the top of the prilling tower, there separated from the transport gas by means of a cyclone and subsequently melted. The conditions under which the cyclone is operated can be chosen to be such that the transport gas discharged contains particles with dimensions of substantially 2–10 $\mu$m. After discharge, this transport gas, containing the fine urea particles dispersed in it, can wholly or partly be added to the cooling gas fed to the cooling zone, so that a smaller quantity of seeding material obtained by grinding, or none at all, need be fed.

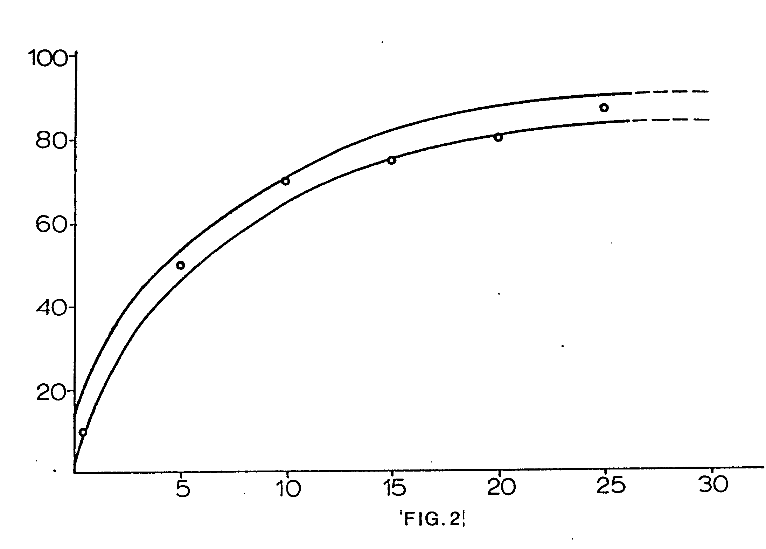

In the solidification process of the sprayed drops to prills, larger and/or smaller crystallites are formed, depending on the manner and rate of cooling. The impact strength of prills built up of small crystallites with random orientation is considerably greater than that of prills built up of large crystallites with substantially the same orientation. The formation of small crystallites in a prill is promoted when, at the crystallization temperature, a drop comes into contact with a large number of fine particles of the seeding material, which fine particles act as crystal seeds. The relation between the number of crystal seeds and the impact strength of the prill has been determined by experiment for prills with an average diameter $d_{50}$ of about 2 mm (i.e. 50% of the prills has a diameter equal to or larger than 2 mm) with a maximum spread in diameter of plus and minus 40% and is shown in Figure 2. On the ordinate the impact strength has been plotted and on the abscissa the number of seeding places per prill. The impact strenght has been determined as follows: a quantity of prills is shot pneumatically, at a speed of 20 m/sec, at an angle of 45°, against a steel plate, upon which the percentage of the prills not fractured in this treatment is fixed.

The figure shows that, in order to obtain an impact strength of 70%, at least 10 seeding places per prill with $d_{50}$=2 mm are required. Preference will be given to trying to reach an impact strength of at least 80%. For this purpose a minimum of 20 seeding places per prill with $d_{50}$=2 mm is required. In practice this means that, per 1000 kg of urea melt to be prilled, about 0.125–0.375 kg of urea dust with a particle size of 2–10 $\mu$m is required to obtain prills with a fairly good to good impact strength. It has been found that, as the relative humidity of the cooling gas increases, a larger quantity of seeding material is required to maintain the proper impact strength. As cooling gas, any gas inert in respect of urea can be applied such as, for instance, air, nitrogen and carbon dioxide. As a rule air is used, in practice, as cooling gas. The quantities of seeding material mentioned will suffice for prilling at the highest relative humidity of the air that may occur.

The seeding material is supplied to the cooling zone at one or more places and homogeneously dispersed in it as far as possible. In order to be able to maintain the dispersion of fine urea particles in the cooling zone, the water vapour pressure of the cooling air must, under all local atmospheric circumstances, be smaller than or be equal to the water vapour pressure of the urea particles at the temperature of the cooling air. If the water vapour pressure of the cooling air is greater, urea particles may even dissolve, so that the seeding effect will be completely lost. The feeding place of the seeding material is, therefore, chosen to be such that the cooling air at that place is heated up to such a degree that the water vapour pressure of the air is smaller than or equal to that of the seeding material. Of course, the air flow carrying the seeding material into the cooling zone must have a low water vapour pressure. To this end this air may, for instance, be predried or heated to, for instance, 50°C.

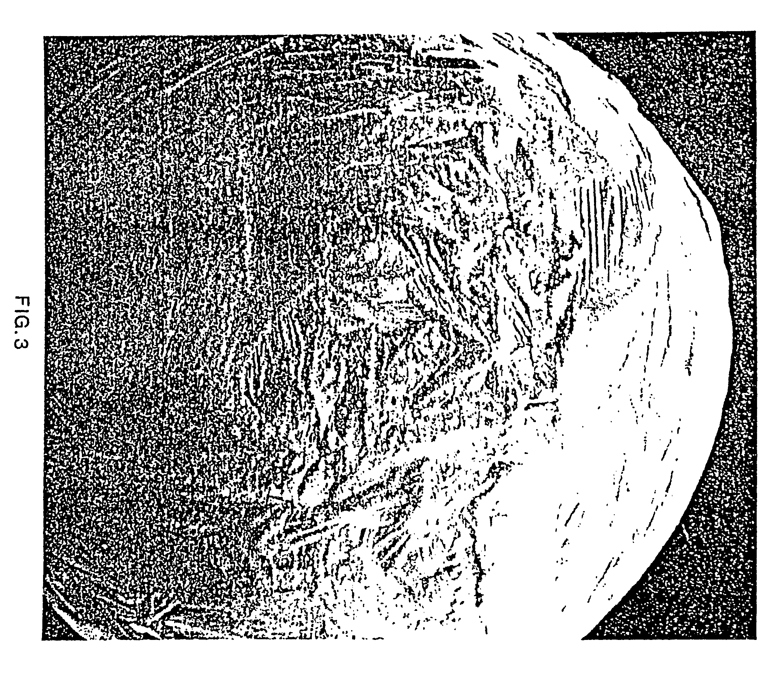

Beside fine urea particles, other crystalline substances may also function as seeding material. Examples of such substances are: chalk, gypsum and potassium chloride. When using seeding material of a different kind, the urea prills obtained are, however, contaminated with these foreign substances and less suitable for certain purposes. As the prills obtained by applying the process according to the invention are substantially built up of small crystallites, they have a good impact strength. A picture of such a prill is given in Figure 3.

The invention is further elucidated by means of the Example without being restrictet to it.

Example

In a prilling tower of a height of 52 m, 40,000 kg per hour of 99.8% urea melt with a temperature of 138°C was sprayed by means of a rotating prilling bucket of which the hole diameter was about 1.3 mm. At 4 places on the circumference of the prilling tower a mixture of air and urea particles, the dimensions of which were 4 $\mu$m on average, with a spread of 2–10 $\mu$m, was blown into the tower through pipes by means of an ejector and dispersed as homogeneously as possible. The particles had been obtained by grinding urea prills to which 3% by weight of calcium stearate had been added. The rate of transport in the pipes was 35 m/sec; the relative humidity of the transport air was 30%. The feed apertures for the seeding material in the prilling tower were 20 m below the prilling bucket.

At the bottom of the tower cooling air was supplied, counter current to the sprayed urea melt, in a quantity of 600,000 m³/hour and with an inlet temperature of 20°C. The quantity of seeding material was varied during the experiments, which were performed at different relative humidites (RH) of the cooling air. After each experiment a sample was taken and the impact strength (IS) of the prills was determined. The results are given in the following Table:

Table

| Test no. | RH (%) | quantity seeding mat. (kg/hr) | IS (%) |
|---|---|---|---|
| 1 | 94 | 5.0 | 62 |
| 2 | 96 | 7.4 | 72 |
| 3 | 93 | 9.7 | 78 |
| 4 | 90 | 11.9 | 78 |
| 5 | 63 | 3.1 | 78 |
| 6 | 63 | 5.9 | 83 |
| 7 | 59 | 8.8 | 85 |
| 8 | 64 | 13.6 | 87 |
| 9 | >90 | – | 10–20 |
| 10 | <90 | – | 50 |

It may be concluded from the Table that, in order to reach the same impact strength, more seeding material is required at a high relative humidity than at a low relative humidity. The experiment no 5 is hereby given as a comparative example, which even shows that at extremely low humidities with less than 8 mg seeding material per m³ of cooling gas acceptable results can be obtained.

The experiments no 9 and no 10 show that, without addition of seeding material, the impact strength is substantially smaller than with addition of seeding material.

**Claims**

1. Process for making urea prills by allowing drops of a substantially water-free urea melt to fall, counter current to a cooling gas, through a cooling zone in which a seeding material has been dispersed, characterized in that in the cooling zone a dispersion of crystalline particles with dimensions of between 2–10 $\mu$m an in a quantity of 8–25 mg per m³ of cooling gas is maintained.

2. Process according to claim 1, characterized in that the dimensions of the particles are substantially 4–8 $\mu$m.

3. Process according to claim 1 or 2, characterized in that the particles have been obtained, at least in part, by grinding of crystalline urea.

4. Process according co claim 3, characterized in that, to the crystalline urea to be ground, an anticaking agent is added.

5. Process according to claim 4, characterized in that, as anticaking agent, a Ca, Mg, Zn or Al salt of a higher fatty acid, clay, talc, calcite or sepiolite is added.

6. Process according to claims 1–5, characterized in that the particles are fed into the cooling zone at one or more points and dispersed herein as homogeneously as possible.

7. Process according to claims 1–6, characterized in that air is used as cooling gas.

8. Process according to claim 7, characterized in that the particles are fed into the cooling zone at such a place that, under all local atmospheric circumstances, the water vapour pressure of the cooling air is smaller than or equal to the water vapour pressure of the particles at the temperature of the cooling air.

**Patentansprüche**

1. Verfahren zur Herstellung von Harnstoffprills, bei dem Tropfen einer im wesentlichen wasserfreien Harnstoffschmelze im Gegenstrom zu einem Kühlgas durch eine Kühlzone herabfallen gelassen werden, in welcher ein Impfmaterial dispergiert worden ist, dadurch gekennzeichnet, dass in der Kühlzone eine Dispersion von kristallinen Teilchen mit Abmessungen zwischen 2 und 10 $\mu$m und einer Menge von 8–25 mg je m³ Kühlgas aufrechterhalten wird.

2. Verfahren nach Anspruch 1, dadurch gekennzeichnet, dass die Abmessungen der Teilchen im wesentlichen 4–8 $\mu$m betragen.

3. Verfahren nach Anspruch 1 oder 2, dadurch gekennzeichnet, dass die Teilchen, zumindest zum Teil, durch Mahlen von kristallinem Harnstoff erhalten wurden.

4. Verfahren nach Anspruch 3, dadurch gekennzeichnet, dass dem zu mahlenden kristallinen Harnstoff ein das Zusammenbacken verhinderndes Mittel zugesetzt wird.

5. Verfahren nach Anspruch 4, dadurch gekennzeichnet, dass als das Zusammenbacken verhinderndes Mittel ein Ca-, Mg-, Zn- oder Al-Salz einer höheren Fettsäure, Ton, Talk, Calcit oder Sepiolit zugesetzt wird.

6. Verfahren nach den Ansprüchen 1 bis 5, dadurch gekennzeichnet, dass die Teilchen an einem oder mehreren Punkten in die Kühlzone eingebracht und möglichst homogen darin dispergiert werden.

7. Verfahren nach den Ansprüchen 1 bis 6, dadurch gekennzeichnet, dass Luft als Kühlgas verwendet wird.

8. Verfahren nach Anspruch 7, dadurch gekennzeichnet, dass die Teilchen in die Kühlzone an einer solchen Stelle eingebracht werden, dass der Wasserdampfdruck der Kühlluft unter allen lokalen atmosphärischen Gegebenheiten kleiner als oder gleich wie der Wasserdampfdruck der Teilchen bei der Temperatur der Kühlluft ist.

**Revendication**

1. Procédé de préparation de perles d'urée en faisant tomber des gouttes d'une masse fondue d'urée essentiellement exempte d'eau, à contre-courant d'un gaz de refroidissement, dans une zone de refroidissement dans laquelle on a dispersé un matériau d'ensemencement, caractérisé en ce que, dans la zone de refroidissement, on maintient une dispersion de particules cristallines avec des dimensions situées entre 2–10 $\mu$m et dans une quantité de 8–25 mg par m³ de gaz de refroidissement.

2. Procédé selon la revendication 1, caractérisé en ce que les dimensions des particules sont essentiellement de 4–8 $\mu$m.

3. Procédé selon l'une des revendications 1 à 2, caractérisé en ce que les particules sont obtenues, du moins en partie, en concassant de l'urée cristalline.

4. Procédé selon la revendication 3, caractérisé en ce qu'on ajoute un anti-agglutinat à l'urée cristalline à concasser.

5. Procédé selon la revendication 4, caractérisé en ce qu'on ajoute, comme anti-agglutinat, un sel de Ca, Mg, Zn ou Al d'un acide gras supérieur, argile, talc, calcite ou sépiolite.

6. Procédé selon l'une des revendications 1 à 5, caractérisé en ce que les particules sont introduites à un ou à plusieurs endroits dans la zone de refroidissement où elles sont dispersées de façon aussi homogène que possible.

7. Procédé selon l'une des revendications 1 à 6, caractérisé en ce que l'air est utilisé comme gaz de refroidissement.

8. Procédé selon la revendication 7, caractérisé en ce que les particules sont introduites dans la zone de refroidissement à un endroit tel que, dans toutes les circonstances atmosphériques locales, la pression de vapeur d'eau de l'air de refroidissement est inférieure ou égale à la pression de vapeur d'eau des particules à la température de l'air de refroidissement.

FIG. 1

'FIG. 2'

FIG. 3